(19) **Europäisches Patentamt**
**European Patent Office**
**Office européen des brevets**

(11) **EP 3 226 021 A1**

(12) **EUROPÄISCHE PATENTANMELDUNG**

(43) Veröffentlichungstag:
04.10.2017 Patentblatt 2017/40

(51) Int Cl.:
$G01S\ 5/10^{(2006.01)}$     $G01S\ 5/02^{(2010.01)}$

(21) Anmeldenummer: **17157702.6**

(22) Anmeldetag: **23.02.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **24.03.2016 DE 102016105638**

(71) Anmelder: **Fachhochschule Lübeck**
**23562 Lübeck (DE)**

(72) Erfinder:
• **Hellbrück, Horst**
**23562 Lübeck (DE)**
• **Pelka, Mathias**
**23566 Lübeck (DE)**

(74) Vertreter: **Hansen, Jochen**
**Hansen und Heeschen**
**Patentanwälte**
**Eisenbahnstrasse 5**
**21680 Stade (DE)**

(54) **S-TDOA (SEQUENTIAL TIME DIFFERENCE OF ARRIVAL)-VERFAHREN ZUR POSITIONSERMITTLUNG VON BEWEGBAREN OBJEKTEN DURCH SEQUENTIELLE ANKUNFTSZEITDIFFERENZBESTIMMUNG VON PERIODISCHEN SIGNALEN**

(57) Die Erfindung betrifft ein Positionsermittlungsverfahren zur Positionsermittlung wenigstens eines bewegbaren Objektes (tag) durch sequentielle Ankunftszeitdifferenzbestimmung, mit den Schritten:
(1) Anker Knoten (i, j, k) senden sequentiell Signale (1, 2, 3) in Form von Datensätzen an weitere Anker Knoten und alle bewegbaren Objekte/Tags, wobei die Datensätze nicht auf die Weitergabe von Entfernungsinformationen beschränkt sind;
(2) alle bewegbaren Objekte/Tags empfangen Datensätze und fangen mit den Datensätzen Empfangszeiten von zumindest zwei Anker Knoten auf, wobei eine Zeitdifferenz zwischen jeweils zwei Datensätzen kalkuliert wird;
(3) Anker Knoten messen ihre jeweilige Eigenzeit zwischen dem Empfang und der Weitergabe der jeweiligen Datensätze und geben diese Information an das Netzwerk weiter;
(4) alle bewegbaren Objekte/Tags stellen die Zeitdifferenzen zur Kalkulation der Position über sequentielle Ankunftszeitdifferenzbestimmung/TDoA bereit.

Ferner betrifft die Erfindung System zur Positionsbestimmung für ein Positionsermittlungsverfahren und ein Ankersynchronisationsverfahren.

**Fig. 3**

EP 3 226 021 A1

**Beschreibung**

Die Erfindung betrifft ein als S-TDoA (Sequential Time Difference of Arrival) bezeichnetes Verfahren zur Positionsermittlung von bewegbaren Objekten durch sequentielle Ankunftszeitdifferenzbestimmung von periodischen Signalen, die eine skalierbare und synchronisierbare Verbesserung zur Positionsbestimmung ermöglicht und ein System.

In der Vergangenheit sind verschiedene Lösungen für Lokalisierungen bzw. Positionsbestimmungen entwickelt worden, um den kostengünstigen Einsatz von kabellosen, sogenannten "wireless" Anwendungen zu ermöglichen. Diese Lösungen sind robust, präzise und energieeffizient. Allerdings sind beim bekannten Stand der Technik einige Fragen zur Skalierbarkeit, Komplexität und Flexibilität für die Anbindung bestehender Systeme immer noch ungelöst.

Vor allem die Anzahl der zu unterstützenden Objekte oder die Aktualisierungsraten für eine Lokalisierung begrenzen die Nutzungsmöglichkeiten derartiger Systeme.

Mit dem erfinderischen Verfahren wird ein neuer Ansatz für ein Verfahren vorgeschlagen, der als S-TDOA (Sequential Time Difference of Arrival) bezeichnet wird, der Begriff steht für sequentielle Ankunftszeitdifferenzmesssysteme im Sinne von Verfahren zur Positionsermittlung von Objekten durch sequentielle Ankunftszeitdifferenzbestimmung und unterstützt eine unbegrenzte Anzahl von Objekten und hohe Aktualisierungsrate in der Positionsbestimmung.

Das Konzept sieht ein sequentielles Signalsenden/-auslösen von Ankerpositionen, sogenannten Ankern, die als Knoten in einem wireless-Netzwerk fungieren, vor, die periodisch Informationen senden. Objekte bilden dabei Referenzpunkte, sogenannte Tags, die durch das Empfangen der Informationen von den Ankerpositionen und den gemessenen Zeitintervallen bis zum Eintreffen der Signale ihre Position bestimmen.

Zusätzlich wird dadurch die Sicherheit des Systems verbessert, weil die Objekte/Tags keine Signale senden und damit nicht aktiv sichtbar sind. In einem Beispiel für die Anwendung des Verfahrens und des Systems ist S-TDOA (sequential Time Difference of Arrival) in Ortungssystemen implementiert die UWB-RF-Chips (ultra wide band-radio frequency-chips) aufweisen.

Der Vorteil dieses erfinderischen S-TDoA Verfahrens und des Systems liegt in einer guten Skalierbarkeit, schnellen Update-Ratensätzen, einem kostengünstigen Einsatz und einer guten Sicherheit für die Privatsphäre. Stichworte sind z.B. Index Terms-Localization, Wireless Networks, Time Difference of Arrival, Two Way Ranging, Skalierbarkeit.

Für kleine kabellose Geräte, z.B. für auf das Internet ausgerichtete Hardware, ist dies entscheidend für einen effizienten Betrieb.

Wenn z.B. ein kabelloser Temperatursensor eine Temperaturänderung detektiert, erhält das System Informationen über den geänderten Temperaturwert am gemessenen Ort des Sensors. Damit kann das System eine Regelung der Temperatur durch Heizen oder Kühlen durchführen.

Folgende Definitionen von Begriffen und Merkmalen gelten für das erfinderische Verfahren und System.

Ein Positions-Verfahren mit einer Positions-Hardware und einem Positions-Algorithmus bzw. einer Regelung. Es wird dabei unterschieden zwischen einer ersten Position mit einer relativen Koordinate in einem gewählten Positionssystem und einem Ort, wobei die Position des Ortes mit ergänzenden Informationen verknüpft ist. (vgl. (Zusammenhang oder Beziehung mit anderen Objekten) nach R. Filjar, G. Jezic, und M. Matijasevic, "Location-Based Services: A Road Towards Situation Awareness," Journal of Navigation, 2008.)

Ein Objekt/Tag, ist eine Art Marke oder Markierung, welche an einen Ort eines bewegbaren Objektes gekoppelt ist und eine Ankerposition oder einen Anker als Referenzpunkt für Messungen nutzt.

Ein Knoten ist ein Objekt/Tag welches mit einem RF-Sender/Empfänger ausgestattet ist.

Ein Positionssystem verfügt über einige Anker mit bekannter Position und Objekten/Tags welche die Ziele bilden, die zu lokalisieren sind.

Das Global navigation satellite systems (GNSS) stellt ortsbezogene Daten bereit und ist sehr erfolgreich darin eine Reihe von Empfangsgeräten anzubinden. Der Grund dafür ist, dass GNSS Empfänger nicht aktiv mit den Satelliten kommuniziert, sondern lediglich passiv die von den Satelliten gesendeten Signale empfängt und die eigene Position dadurch ermittelt. Die Anzahl der GNSS Sender ist nicht beschränkt, jedoch ist mit GNSS eine Positionsbestimmung in Gebäuden nicht möglich. Daher ist es nötig geeignete Positionsbestimmungs-Systeme für den Einsatz in Gebäuden zu entwickeln und einzusetzen.

Mit der Entwicklung der sogenannten ultra-wide band (UWB) Technologie wurde eine genaue Zeitmessung möglich, weiter sanken die Systemkosten mit dem Einsatz günstiger RF Chips welche das Senden und Empfangen von Daten zur Positionsbestimmung ermöglichten.

Eine der Einschränkungen bei bestehenden, verfügbaren Positionsbestimmungs-Systemen ist die beschränkte Anzahl von Objekten/Tags und eine sehr starke Beschränkung der Aktualisierungsraten.

Die Aktualisierungsraten andererseits beeinflussen die Skalierbarkeit des Systems, was ein Problem für Positionssysteme darstellt (vgl. H. Liu, H. Darabi, P. Banerjee, and J. Liu, "Survey of Wireless Indoor Positioning Techniques and Systems," IEEE Transactions on Systems, Man, and Cybernetics, Part C: Applications and Reviews, vol. 37, no. 6, pp. 1067-1080, 2007, G. Deak, K. Curran, and J. Condell, "A Survey of Active and Passive Indoor Localisation Systems," Computer Communications, vol. 35, no. 16, pp. 1939-1954, 2012.)

Der Hauptgrund dafür liegt derzeit darin, das Tags mit Ankerpositionen zur Positionsbestimmung im Stand der Technik über das sogenannte two-way ranging Verfahren (TWR) und time difference of arrival Verfahren (TDoA) kommunizieren.

Das erfinderische Verfahren beseitigt die Mängel des Standes der Technik und schlägt ein Verfahren und Systemkonzept mit passiven Tags und ohne zeitsynchronisierte Kommunikation mit Ankern/Ankerpositionen vor, wodurch sowohl die Privatsphäre gesichert wird als auch eine unbegrenzte Anzahl von Tags im System einbindbar sind.

Das erfinderische Verfahren beschreibt Schritte für ein Verfahren zur Positionsermittlung von Objekten durch sequentielle Ankunftszeitdifferenzbestimmung von periodischen Signalen, welche das Problem der Skalierbarkeit unter Wahrung der Privatsphäre bei Positionsbestimmungs-Systemen löst.

Nachfolgend werden die bekannten Verfahren im **Stand der Technik** erläutert. Derzeit sind unterschiedliche zeitbasierte Positionssysteme bekannt, die vermehrt Zeitsignale zur Bestimmung von Distanzen und Berechnung von Positionen messen. Diesen Stand der Technik zeigen die Publikationen:

"A survey of wireless indoor positioning techniques and systems" von H. Liu, H. Darabi, P. Banerjee, and J. Liu, "Survey of Wireless Indoor Positioning Techniques and Systems," IEEE Transactions on Systems, Man, and Cybernetics, Part C: Applications and Reviews, vol. 37, no. 6, pp. 1067-1080, 2007, und

G. Deak, K. Curran, and J. Condell, "A Survey of Active and Passive Indoor Localisation Systems," Computer Communications, vol. 35, no. 16, pp. 1939-1954, 2012,

die sowohl auf die mathematischen Hintergründe für bekannten Messverfahren eingehen als auch Genauigkeit, Präzision und Skalierbarkeit der bekannten Systeme diskutieren.

Ferner werden auch die Datensicherheit und Wahrung der Privatsphäre in den nachfolgend genannten Druckschriften diskutiert:

J. Wang, R. K. Ghosh, and S. K. Das, "A Survey on Sensor Localization," Journal of Control Theory and Applications, 2010,

J. Shen, A. F. Molisch, and J. Salmi, "Accurate Passive Location Estimation using TOA Measurements," IEEE Transactions on Wireless Communications, vol. 11, no. 6, pp. 2182-2192, 2012,

R. M. Vaghefi and R. M. Buehrer, "Asynchronous Time-of-Arrival-based Source Localization." in ICASSP, 2013, pp. 4086-4090,

Die weiteren nachfolgend genannten Druckschriften erklären lediglich die allgemeine Konzeption zu Time Difference of Arrival (TDoA):

F. Gustafsson and F. Gunnarsson, "Positioning using Time-Difference of Arrival Measurements," in IEEE International Conference on Acoustics, Speech, and Signal Processing, vol. 6. IEEE, 2003, pp. VI-553 ;

S. Fischer, "Observed Time Difference Of Arrival (OTDOA) Positioning in 3GPP LTE," Technical report, July, Tech. Rep., 2014;

Y. Jiang, V. Leung, "An Asymmetrie Double Sided Two-Way Ranging for Crystal Offset," in International Symposium on Signals, Systems and Electronics. IEEE, 2007, pp. 525-528 und

L. J. Xing, L. Zhiwei et al., "Symmetrie Double Side Two Way Ranging with Unequal Reply Time," in IEEE 66th VehicularTechnology Conference, 2007, pp. 1980-1983.

Die Probleme im Stand der Technik sind im Wesentlichen durch die mangelhafte Skalierbarkeit bekannter Systeme, hier TWR und TDoA bedingt.

In diesem Abschnitt werden deshalb die bekannten Systeme hinsichtlich Skalierbarkeit und datentechnischer Sicherheitsanforderungen diskutiert ohne auf die im Stand der Technik genannten Schriften explizit einzugehen, die die bekannten technischen Einzelheiten ausführlich behandeln.

Zuerst wird auf die allgemeine Signalübertragung mit Zeitstempelfähigkeit in den Anwendungen eingegangen. Weiter werden die Anforderungen an Two-Way Ranging (TWR) und Time Difference of Arrival (TDoA) im Zusamnmenhang mit der Skalierbarkeit und Datensicherheit erörtert.

Elektromagnetische Signale (radio signals) werden mit Lichtgeschwindigkeit $c_0$ übertragen. Die Übertragung von Informationen/Nachrichten beträgt damit in üblichen Räumen, üblicherweise Innenräumen, wenige Mikrosekunden. In einigen Innenräumen geringer Größe erreicht das erste Signal bereits den Empfänger während der Sender noch aktiv ist. Seit der Einführung zeitbasierter Positionssysteme mit Informationsübertragung ist dies Verständnis wichtig für die Zusammenstellung und den Transport einer Information als Signal.

Die Information wird durch einen sogenannten Mikrocontroller bereitgestellt, der durch seine Taktrate in der Übertragungsgeschwindigkeit bestimmt bzw. begrenzt ist. Nach der Zusammenstellung der Information wird diese über einen Bus/Schnittstelle an den Sender gegeben, z.B. I2C oder SPI.

Zuletzt wird der Sender konfiguriert und der PLL sendet und die Übertragung beginnt.

Am Empfänger wird das übertragene Signal empfangen, dekodiert und an eine Signalverarbeitungseinheit weitergeleitet. Den überwiegenden zeitrelevanten Teil nimmt dabei die Übertragung des Signals ein, insbesondere bei Standards wie IEEE 802.15.4 und Bluetooth mit niedrigen Datenübertragungsraten. Die kabellose Datenübertragung ist relativ langsam gegenüber der Datenweitergabe im Bus bzw. der Schnittstelle und der Verarbeitungszeiten im Mikrocontroller. Zudem verlangsamt sich die Übertragung mit dem Einsatz der Zugriffsmethoden auf Medien, wie z.B. CSMA, (vgl. Z. Sahinoglu and S. Gezici, "Ranging in the IEEE 802.15. 4a Standard," in Wireless and Microwave Technology Conference, 2006, pp. 1-5. "...With our hardware 8-Bit microcontroller, 4 MHz SPI and RF gross rate of 850 kbps, the transfer time is approximately $t_p = 1.1$ ms...").

Es wurde insbesondere erkannt, dass bei dem im Stand der Technik befindlichen Two-Way Ranging (TWR), mit einem Tag und einem Anker und multipler Informationsübertragung, dem klassische TWR, zwei Informationsübertragungen jeweils zwischen einem Tag und einem Anker benötigt werden. Der Zeitpunkt für die Sendung und den Empfang legt dabei die zeitliche Länge des Übertragungszeitraums der Informationsübertragung fest, damit ist die Entfernung zwischen Anker und Tag berechenbar.

Die Entfernung wird dabei durch die folgende Gleichung bestimmt:

$$ s_{i,t} \;=\; \frac{(t_{i,r}-t_{i,t})-(t_{t,t}-t_{t,r})}{2}c_0. $$

Es sind unterschiedliche Erweiterungen für diesen Ansatz bekannt, so zeigt der Stand der Technik z.B. ein sogenanntes Double-Sided Two-Way Ranging (DS-TWR), (vgl. Y. Jiang and V. Leung, "An Asymmetrie Double Sided Two-Way Ranging for Crystal Offset," in International Symposium on Signals, Systems and Electronics. IEEE, 2007, pp. 525-528 und

L. J. Xing, L. Zhiwei et al., "Symmetric Double Side Two Way Ranging with Unequal Reply Time," in IEEE 66th VehicularTechnology Conference, 2007, pp. 1980-1983).

Das Positionsermittlungsverfahren zur Positionsermittlung wenigstens eines bewegbaren Objektes durch sequentielle Ankunftszeitdifferenzbestimmung,
umfasst die Schritte:

(1) Anker Knoten senden sequentiell Signale in Form von Datensätzen an weitere Anker Knoten und alle bewegbaren Objekte/Tags, wobei die Datensätze nicht auf die Weitergabe von Entfernungsinformationen beschränkt sind;
(2) alle bewegbaren Objekte/Tags empfangen Datensätze und fangen mit den Datensätzen Empfangszeiten von zumindest zwei Anker Knoten auf, wobei eine Zeitdifferenz zwischen jeweils zwei Datensätzen kalkuliert wird;
(3) Anker Knoten messen ihre jeweilige Eigenzeit zwischen dem Empfang und der Weitergabe der jeweiligen Datensätze und geben diese Information an das Netzwerk weiter;
(4) alle bewegbaren Objekte/Tags stellen die Zeitdifferenzen zur Kalkulation der Position über sequentielle Ankunftszeitdifferenzbestimmung / TDoA bereit.

Das erfindungsgemäße System zur Positionsbestimmung für ein Positionsermittlungsverfahren zur Positionsermittlung wenigstens eines bewegbaren Objektes durch sequentielle Ankunftszeitdifferenzbestimmung weißt wenigstens drei positionierte Anker in einem Raum auf, wobei zumindest ein bewegbares Objekt sich räumlich im geometrisch aufgespannten Raum der Anker befindet.

Das System zur Positionsbestimmung für ein Verfahren zur Positionsermittlung zumindest eines bewegbaren Objektes durch sequentielle Ankunftszeitdifferenzbestimmung ist gekennzeichnet dadurch, dass das System mit Positionsdaten zusätzliche Daten von Sensorikeinheiten, barometrischen Drucksensoren, Temperatursensoren und/oder inertialen Messeinheiten bereitstellend ausgebildet ist.

Weiter ist das Ankersynchronisationsverfahren mit einem System zur Synchronisation von Ankern auf Basis der Positionsermittlung erfindungsgemäß, wobei zumindest folgende Schritte enthalten sind:

(1) Bestimmung der Position der Anker
(2) Berechnung der Distanzen d zwischen den jeweiligen Ankern i und j mit nach folgender Gleichung

$$d_{i,j} = \sqrt{\left(x_i - x_j\right)^2 + \left(y_i - y_j\right)^2 + \left(z_i - z_j\right)^2}$$

(3) Synchronisierung der Anker über die bekannte Signallaufzeit, der bekannten Eigenzeiten, und Kompensation der Uhrendrift.

Ein Objekt stellt die zu ortende Einheit oder Person oder Gegenstand dar. Ein Referenzpunkt dient als bekannte Ortsreferenz für eine Messung relativ zum Objekt. Es kann eine beliebige Anzahl von Objekten geortet werden.

Es können Objekte über sequentiell versendete Nachrichten geortet werden und weiter können Objekte über ein Ad-Hoc Netz geortet werden, sofern die Position von einigen Objekten bekannt ist.

Das erfindungsgemäße Verfahren und System ist geeignet, um innerhalb und außerhalb von Gebäuden Objekte zu orten sowie um über nicht synchronisierte Referenzpunkte eine beliebige Anzahl von Objekten zu orten.

Weitere Vorteile der Erfindung:

- ortet passiv eine beliebige Anzahl von Objekten;
- ohne Sichtverbindung können Objekte geortet werden;
- Ortung innerhalb von 5 ms (200 Hz)möglich;
- keine Beschränkung durch Anzahl der Objekte, es können beliebig viele Objekte geortet werden;
- keine Beschränkung durch die Anzahl der Referenzpunkte, es können beliebig viele Referenzpunkte verwendet werden;
- es wird keine weitere Infrastruktur benötigt.

Zudem werden Zähler verwendet, um Zeiten, die in Distanzen umgerechnet werden, zu messen, wobei hierzu insbesondere asynchrone Zähler verwendet werden, um Zeiten, die in Distanzen umgerechnet werden, zu messen.

Eine entsprechende Umkehrung ermöglicht Zeitsynchronisierung von Referenzpunkten sowie weiter oder alternativ eine Uhrenkompensation, Kompensation von schneller oder langsam laufenden Uhren, von Objekten.

Um die Anzahl der Nachrichten zu reduzieren, wird die Ortungsinformation (z.B. Referenzpunktposition, Verarbeitungszeit) in der aktuellen Nachricht versendet.

Es wird keine Zellenstruktur für die Ortung benötigt.

Nachfolgend werden Ausführungsbeispiele der Erfindung anhand der beiliegenden Zeichnungen in der **Figurenbeschreibung** detailliert beschrieben, wobei diese die Erfindung erläutern sollen und nicht beschränkend zu werten sind:

Es zeigen:

Fig. 1    eine schematische Darstellung einer räumlichen Struktur und beispielhaft den Informationsaustausch beim Two-Way Ranging (TWR) zwischen einen Anker und einen Tag. Die Anker sind als Kreuze X dargestellt. Der Tag ist als O dargestellt.

Fig. 2    eine schematische Darstellung einer Struktur zur beispielhaften Erläuterung der Positionsbestimmung und des Informationsaustausches in einem Diagramm für Uplink-TDoA;

Fig. 3    eine schematische Darstellung eines Ausführungsbeispiels für das Verfahren zur Positionsermittlung von Objekten durch sequentielle Ankunftszeitdifferenzbestimmung von periodischen sequentiellen Signalen (S-TDoA)

Fig. 4    eine schematische Darstellung eines Ausführungsbeispiels in einer Basis Struktur für die Erläuterung zu S-TDoA. Zeitstempel sind mit t indiziert, Entfernungen sind mit s indiziert.

Fig. 5    eine schematische Darstellung eines Ausführungsbeispiels mit vier Ankern, deren Positionen mit einem X mit Indizes markiert sind und drei Tags zeigen, die durch Kreise ihre Position markieren und mit T mit Indizes bezeichnet sind. Die Positionen der Tags sind dabei willkürlich gewählt.

Fig. 6    eine Darstellung eines Ausführungsbeispiels mit Histogramm zusammmen mit einer empirischen Summenverteilungsfunktion für den Fehler.

Fig. 7    eine Darstellung eines Ausführungsbeispiels wobei für jede einzelne Position einer berechneten TWR Position dem Ergebnis des S-TDoA Algorithmus gegenübergestellt ist, wobei Pfeile die jeweiligen Messpaare (Kreis S-TDoA, Kreuz TWR) kennzeichnen. Im linken Teil der Figur ist gefilterte gleitende Mittelwert beider Ergebnisse dargestellt. Der euklidische Ortsfehler ist im rechten Teil der Figur für jedes Messpaar aufgetragen.

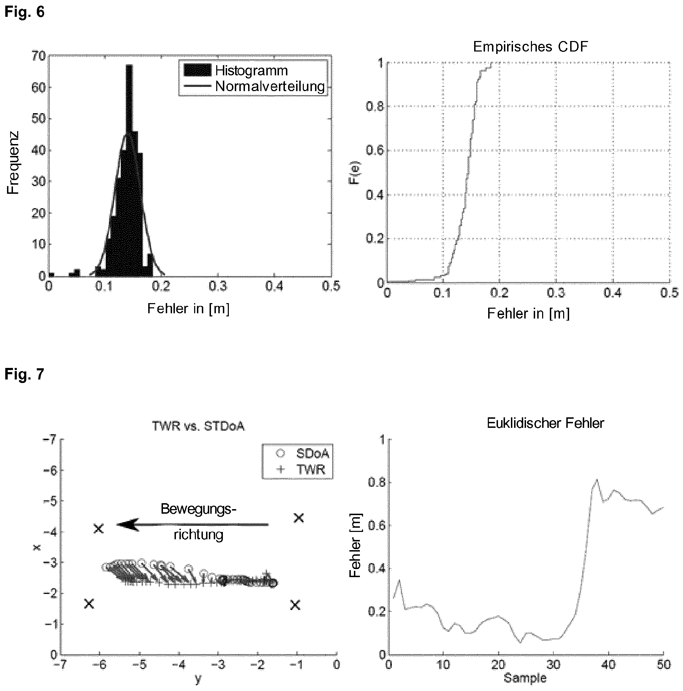

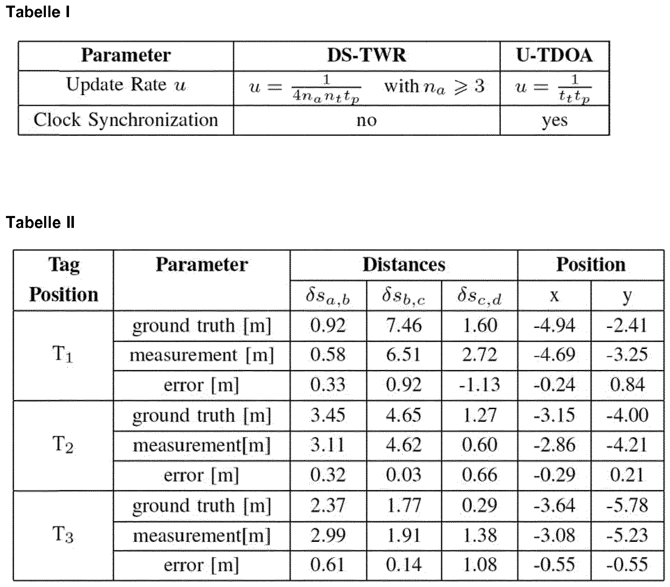

In Fig. 7 ist der gefilterte gleitende Mittelwert im rechten Teil der Figur dargestellt. Für jede einzelne Position wurde die TWR Position berechnet und dem Ergebnis des S-TDoA Algorithmus gegenübergestellt, wobei Pfeile die jeweiligen Messpaare (Kreis S-TDoA, Kreuz TWR) kennzeichnen. Der euklidische Ortsfehler ist im rechten Teil der Fig. 7 für jedes Messpaar aufgetragen.

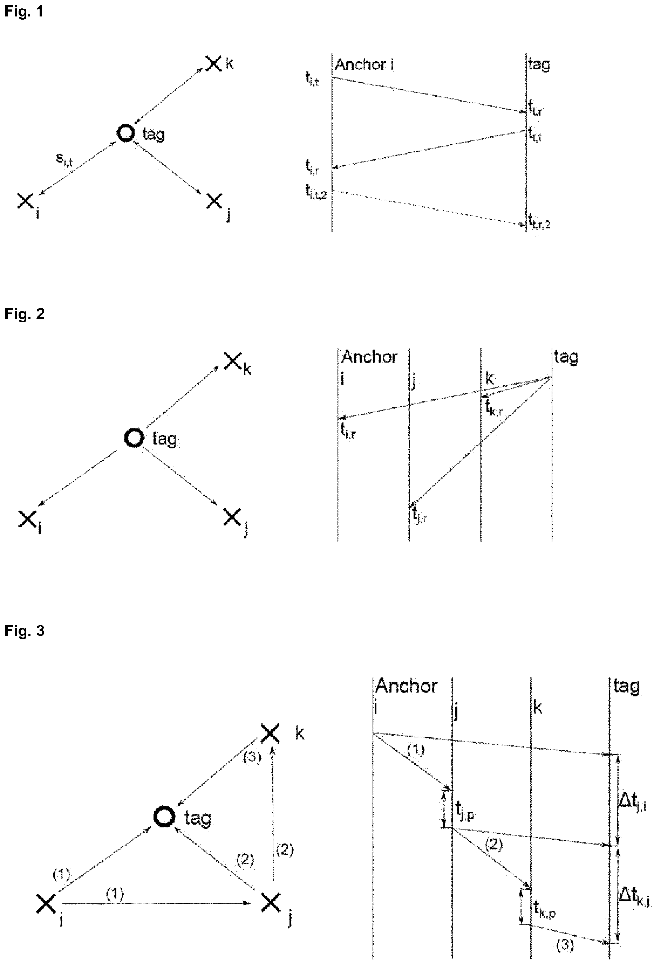

Die Erweiterungen der TWR sind dabei in der Lage Taktabweichungen, sogenannte Zeitgeberungenauigkeiten (der clock) zu kompensieren um bessere Entfernungsergebnisse bereit zu stellen. Einige der Erweiterungen benötigen weitere zusätzliche Informationen, wie die in gestrichelter Linie in **Fig. 1** gezeigte zurückgespiegelte Skalierbarkeit (eines Ereignisses).

Bei einem ersten Beispiel mit dem erfinderischen Verfahren wird ein Double Side Two Way Ranging mit einer Eigenentwicklung eines kabellosen Sensor Knoten (Tiny TriSOS) und drei Ankern mit einem Tag eingesetzt, wie in **Fig. 1** gezeigt. Die Hardware besteht dabei aus einem Mikrocontroller mit AVR XMEGA Architektur. Die kabellosen Sensorknoten nutzen zwei RF Transceiver, wobei der eine nach IEEE 802.15.4 im 2.4 GHz ISM Band (AT86RF233) und der andere nach IEEE 802.15.4a im UWB (DW1000) arbeitet und beide Zeitstempelfähigkeiten besitzen. Die UWB besitzt einen eingebauten 64 GHz Zeitgeber für Zeitstempelmarken für den Empfang und die Versendung einer Information. Anker und Tag nutzen dabei die gleiche Hardware. Wobei in der praktischen Anwendung für den Austausch vier Informationen für einen kompletten DS-TWR und ein extra Datenaustausch benötigt werden. Dabei benötigt der Datentransfer einer Information von einem Knoten zu einem anderen Knoten $t_p$ = 1,1 ms.

Wie auch immer hier die Dateninformation übertragen wird, reicht die Entfernung zwischen einem Anker und einem Tag dabei nicht aus gleichzeitig eine Position zu bestimmen (zu errechnen).

Die Mindestbedingungen für eine Positionsbestimmung erfordern mindestens drei Messungen zwischen n=3 Ankern. Dafür benötigt die TWR Anwendung mindestens 4 x $t_p$ x n =13,2 ms. Daraus folgt für die Übertragungsrate eine Frequenz von 83 Hz für ein einzelnes Tag. Bei $n_t$ Tags und $n_a$ Ankern und vier Informationsübertragungen zwischen Tag und Anker um eine Entfernungsabschätzung/Entfernungsbestimmung vornehmen zu können, wird damit eine Übertragungsrate von

$$u = \frac{1}{4 n_a n_t t_p} \text{ wobei } n_a \geqslant 3, \, n_t \geqslant 1.$$

erforderlich. Dabei ist festzuhalten, dass die Zugriffszeiten innerhalb der Hardwarebausteine keine Berücksichtigung finden.

In der praktischen Anwendung benötigt TWR zumindest drei Anker um die Positionsbestimmung hinreichend zu verbessern und Signal abschwächende Effekte, wie z.B. Abschattungen auszugleichen. Eine anwachsende Dichte der Tags hat bei TWR keine Auswirkung auf die Genauigkeit in der Positionsbestimmung.

Eine Möglichkeit diesem Problem beizukommen, ist es Sende-Signale von den Ankern zu synchronisieren, nach einem Verfahren, wie es derzeit bei Navigations-Satelliten-Systemen erfolgt. (vgl. P. Daly, "Navstar GPS and GLONASS: Global Satellite Navigation Systems," Electronics & Communication Engineering Journal, 1993.).

NAVSTAR-GPS nutzt das präzise Signal von Atomuhren um die Signale der Satelliten miteinander zu synchronisieren. Dabei werden sogenannte Gold-Folgen genutzt, die wegen ihrer einfachen Erzeugung die in der Praxis am häufigsten eingesetzten Spread-Spectrum-Signale sind und eine gute Unterscheidungsmöglichkeit der erzeugten Codefolgen zueinander besitzen, da diese alle zueinander ein relativ kleines periodisches Kreuzkorrelationsmaximum aufweisen. Alle Satelliten senden dabei kontinuierlich und die Empfänger dekodieren die empfangenden Signale. In Abhängigkeit vom Zeitunterschied dieser empfangenen Signale beim Empfänger, ist die Position des Empfängers berechenbar.

Dieses Verfahren ist auf Verfahren zur Positionsbestimmung in einem Raum übertragbar, wenn man dabei einmal außer Acht lässt, dass Atomuhren sehr kostspielig sind und die Synchronisation mit gängigen Uhren sehr schwierig ist.

Eine gängige Vorgehensweise ist die Anwendung eines uplink-TDoA (UTDOA), wie in Figur 2 gezeigt. Im Unterschied zu konventionellen TDoA, wird das uplink-TDoA Signal direkt vom Tag ausgesendet. Ein Beispiel dazu wird in der Publikation von Xiong in H. Xiong, Z. Chen, W. An, und B. Yang, in "Robust TDOA LOcalisation Algorithm for Asynchronous Wireless Sensor Networks" international Journal of Distributed Sensor Networks, 2015 beschrieben.

Dabei wird durch jeden Anker die Ankunftszeit des Signals vom jeweiligen Tag als absoluter Zeitwert aufgezeichnet und die Zeitdifferenz der Ankunftszeit des Signals zu einem Referenz Anker berechnet. In Abhängigkeit der Zeitdifferenzen der eingegangenen Signale wird dann die jeweilige Position berechnet.

Die Anwendung von U-TDoA weist damit die gleichen Skalierbarkeitsprobleme auf wie TWR.

U-TDoA nutzt ein Einzelsignal welches vom Tag ausgesandt wird. Jedes dieser Einzelsignale benötigt dabei eine Prozesszeit von $t_p$ = 1,1 ms pro Signalinformation, womit eine Signal-Wiederholrate von of $u = \frac{1}{n_t t_p}$ bzw. etwa 900 Hz pro Tag erfüllt sein muss.

Dabei lassen die hardwarebedingten Zugriffszeiten bzw. Verzögerungen die Signal-Wiederholrate signifikant sinken.

Die Signal-Wiederholrate bei U-TDoA wird von der Anzahl der Anker nicht beeinflusst, jedoch benötigt U-TDoA eine präzise zeitliche Synchronisation der Anker untereinander und eine hardwaretechnische Lösung für den Zugriff auf Tags. Dadurch erhöhen sich die Kosten u.a. durch zusätzliche Ausrüstung.

In **Tabelle I** werden Signal-Wiederholraten und die Anforderungen an eine zeitliche Synchronisation für die Anwendungen TWR und TDoA einander gegenüber gestellt.

Bei der Anwendung von TWR sinkt die Signal-Wiederholrate je mehr Tags und Anker genutzt werden.

Die klassischen TDoA, wie sie im NAVSTAR-GPS Anwendung finden, besitzen keine Skalierbarkeitsprobleme, benötigen jedoch eine spezielle Hardware und die Anker benötigen eine genaue zeitliche Synchronisation durch Atomuhren.

U-TDoA benötigt eine zeitliche Synchronisation und unterstützt lediglich eine begrenzte Anzahl von Tags.

Bei TWR, wie auch bei U-TDoA sinken die Signal-Wiederholraten mit steigender Anzahl von Tags. Sobald die Anzahl der Tags steigt, steigt auch die Anzahl der Signalinformationen zwischen Anker und Tags.

In Zukunft werden auf dem Markt, z.B. beim Internet der Dinge / Intelligenten Gegenständen, kabellosen Sensor-Netzwerken oder innovativen Informationssystemen, die unternehmensübergreifend aus dem Zusammenspiel einzelner Komponenten und Dienste im Internet der Dinge und Dienste entstehen, beliebig skalierbare Positionssysteme in Folge der beliebigen Anzahl von Geräten benötigt.

Dafür wird im Folgenden der Lösungsansatz des erfinderischen Verfahrens zur Unterstützung der Signalübertragung zwischen Ankern mit beliebig vielen Tags ohne zeitliche Synchronisation erläutert. Weiter unterstützt dieser neue Lösungsansatz eine unbegrenzte Anzahl von Tags mit einer hohen Signal-Wiederholrate. Im Unterschied zu U-TDoA wird dabei eine sequentielle Ankunftszeitdifferenzbestimmung von periodischen Signalen genutzt, der S-TDoA genannt wird. Nachfolgend werden die Gleichungen für die Berechnung der Position der Tags abgeleitet und eine Lösung des gestellten Problems präsentiert.

In **Fig. 3** wird ein Verfahren zur Positionsermittlung von Objekten durch sequentielle Ankunftszeitdifferenzbestimmung von periodischen/sequentiellen Signalen dargestellt. In Fig. 3 wird auf der linken Seite die Struktur des Problems dargestellt und auf der rechten Seite das zeitliche Diagramm der Signalübertragung. Dabei sendet der Anker i ein Signal (1) und Anker j empfängt das Signal (1). Anker j zeichnet die Ankunftszeit als Zeitstempel $t_{j,r}$ des Signals (1) auf und sendet unverzüglich ein weiteres Signal (2) und zeichnet die Absendezeit als Zeitstempel $t_{j,t}$ auf.

Anker j berechnet seine eigene Zeit für die Berechnung als $t_{j,p} = t_{j,t} - t_{j,r}$.

Anker k empfängt das Signal (2) von Anker j und wiederholt das Verfahren für alle weiteren Knoten. Zwischenzeitig empfangen die Tags die Signale (1), (2) und (3) und zeichnen die Zeitstempel $t_{t,a}$, $t_{t,b}$ und so weiter auf.

Der jeweilige Tag berechnet die Zeitdifferenz nach $\Delta t_{j,i} = t_j - t_i$.

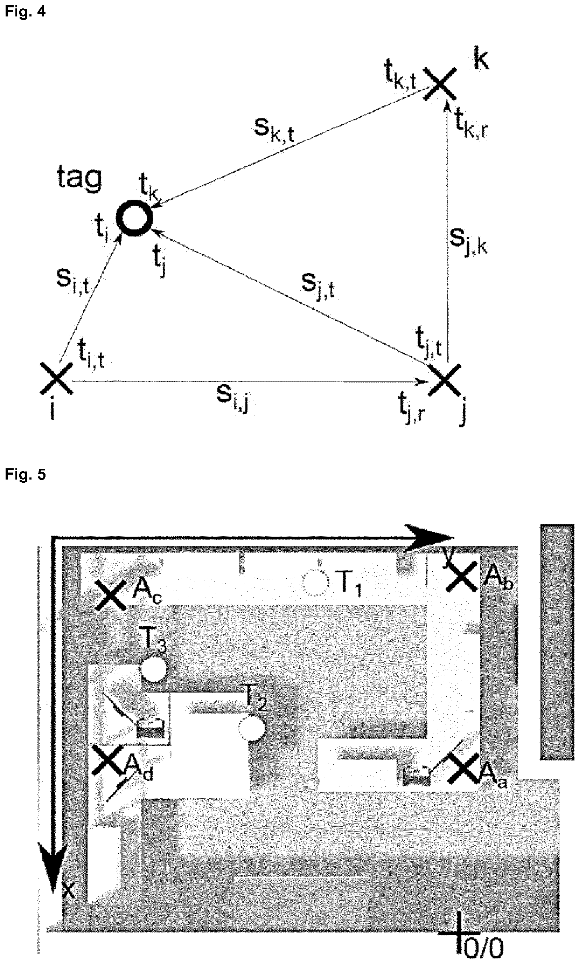

Für die in **Fig. 4** dargestellte Struktur leiten sich die entsprechenden Gleichungen für die Position analog ab. Die Entfernungen, z.B. $s_{i,j}$, sind im Voraus bekannt.

Der Tag erhält das Signal von Anker i und j und zeichnet die Zeitstempel $t_i$ und $t_j$ auf. Der jeweilige Tag errechnet daraus die Zeitdifferenz $\Delta t_{j,i} = t_j - t_i$ nach d

$$(\Delta t_{j,i} - t_{j,p}) \cdot c_0 = s_{i,j} - s_{i,t} + s_{j,t}. \qquad (1)$$

wobei $c_0$ die Lichtgeschwindigkeit und $s_{i,t}$ die Entfernung zwischen dem i-ten Anker und dem Objekt/Tag sind. Nach Gleichung (1) entspricht das der Zeitdifferenz $\Delta t_{j,i}$ reduziert um die Prozesszeit $t_{j,p}$, die der Summe der Entfernungen zwischen Anker i und j und der Entfernung zwischen Anker j und dem Tag minus der Entfernung zwischen dem Anker i und dem Tag.

Mit $\Delta t^*_{j,i} = \Delta t_{j,i} - t_{j,p}$ wird dabei die Zeitdifferenz als Wert für die Prozesszeit bezeichnet. Die Gleichung (1) ist die Basisgleichung für das erfinderische Verfahren zur Positionsermittlung von Objekten durch sequentielle Ankunftszeitdifferenzbestimmung von periodischen Signalen. Falls diese Gleichung nicht gelöst werden kann, ist eine Positionsbestimmung nicht möglich.

**Fig. 4** erläutert das zu lösende Problem für das erfinderische Verfahren zur Positionsermittlung von Objekten durch sequentielle Ankunftszeitdifferenzbestimmung von periodischen Signalen. Dabei sind die Zeitstempel mit dem Buchstaben t und die Entfernungen zwischen Ankern und Tag mit s bezeichnet.

Die unbekannte Entfernung zwischen dem i-ten Anker und dem Tag ist $s_{i,t}$. Zu diesem Zeitpunkt sind auch die Entfernungen $s_{j,t}$ oder $s_{k,t}$ unbekannt. Für den zweidimensionalen Fall errechnet sich die Entfernung $s_{i,t}$ nach Gleichung

$$s_{i,t} = \sqrt{(x - x_i)^2 + (y - y_i)^2}. \qquad (2)$$

Für Problemlösungen mit n Ankern und n-1 Messwerten für den zweidimensionalen Fall bedient man sich der Vektorkoordinatenschreibweise, die die Gleichung

$$f(\mathbf{r}) = s_{i,j} - \Delta t_{j,i}^* \cdot c_0 - \sqrt{(x - x_i)^2 + (y - y_i)^2} + \sqrt{(x - x_j)^2 + (y - y_j)^2} = 0. \qquad (3)$$

abbildet.

Um dieses Optimierungsproblem für n-1 Gleichungen zu lösen, nutzt man die iterative multidimensionale Newton Methode

$$\Delta\mathbf{r} = -J(\mathbf{r}_0)^{-1} f(\mathbf{r}_0) \qquad (4)$$

mit Jakobi Matrix

$$J_f(\mathbf{r}_0) \text{ of } f(\mathbf{r}_0),$$

$$J_f(\mathbf{r}_0) = \begin{pmatrix} \frac{\partial f_1(\mathbf{r}_0)}{\partial x} & \frac{\partial f_1(\mathbf{r}_0)}{\partial y} \\ \vdots & \vdots \\ \frac{\partial f_{n-1}(\mathbf{r}_0)}{\partial x} & \frac{\partial f_{n-1}(\mathbf{r}_0)}{\partial y} \end{pmatrix}. \qquad (5)$$

Damit erhält man für jeden Iterationsschritt des Algorithmus einen neuen Wert r für die Position mit $\Delta r = r - r_0$.

Die Wahl für den Anfangswert hängt von der Anwendungssituation ab, aber ein guter Ansatz ist die Wahl eines Punktes innerhalb des (Anker-)Gebietes für die Positionsbestimmung.

Sobald die Gleichung (1) erfüllt ist, ist man damit in der Lage eine Position auf Basis der Zeitdifferenzen zu bestimmen.

Wie wir uns erinnern, wird als Ansatz verfolgt, dass eine zeitliche Synchronisation nicht erforderlich ist und das zu bestimmende Objekt/der Tag passiv ist, d.h. kein Signal aussendet und eine unbegrenzte Anzahl von Tags unterstützt wird. Jeder Anker meldet seine Zeitdauer für den Empfang, die Verarbeitung und das Erzeugen eines Signals als "processing time $t_{i,p}$" und bezeichnen diese Zeitdauer als Eigenzeit $t_p$ (typical time). Daraus folgt für na Anker eine Signal-Wiederholrate von $U = \frac{1}{n_a t_p}$.

Für die Hardware sind Eigenzeiten $t_p$ = 1,1 ms typisch/üblich. Und bei vier Ankern beträgt die Signal-Wiederholrate für das System mehr als 200 Hz.

Trotzdem können alle Tags gleichzeitig ihre Position bestimmen. Im Unterschied zu TWR und U-TDoA wird die Signal-Wiederholrate von S-TDoA nicht durch die Anzahl der Tags beeinflusst, wodurch das System sehr skalierbar ist.

Der Tag bleibt während des Einsatzes des Verfahrens zur Positionsbestimmung passiv und das Verfahren unterstützt eine unbeschränkte Anzahl von Tags.

Ergänzend ist damit die Sicherheit der Privatsphäre gewährleistet, weil die Tags passiv sind und kein Signal aussenden. Damit kann das Vorhandensein eines Tags nicht festgestellt werden.

Zeitgeberungenauigkeiten durch Drift sind für jedes zeitbasierte Positionssystem ein Problem, das gilt auch für S-TDoA, weil Zeitstempel genutzt werden. Diese Drift gilt für alle Zeitgeber der benutzten Geräte, die das Verfahren für die Positionsbestimmung einsetzen.

Die Verzögerung die durch die Eigenzeit $t_p$ zwischen eingehendem Signal und Versenden eines anderen Signals eintritt, ist für die Geräte relativ lang (näherungsweise $t_p$ = 1,1 ms). Bei n Ankern, ist die Gesamtzeit der Messverzögerung $t_t = t_p \cdot n$. Die Zeitgeberungenauigkeiten durch Drift entstehen auch beim sequentiellen Austausch von Signalen der Anker bei S-TDoA.

Das angenommene Maximum der Zeitgeberungenauigkeiten durch Drift beträgt gemäß Datenblatt des Kristalls cd= 1,5 ppm. Daraus folgt eine maximale Zeitgeberungenauigkeiten durch Drift von $2 \cdot tt \, c_d$ = 13,2 ns bei vier Ankern. Insgesamt liegt das Ergebnis bei einer Messungenauigkeit von etwa $s_e = 2t_t \cdot cd \cdot c_0$ =3,95 m, wobei $c_0$ die Lichtgeschwindigkeit (299.792.458 m/s im Vakuum) ist. Also wird die Genauigkeit des S-TDoA Verfahrens durch die Zeitgeberungenauigkeiten durch Drift und die Signalübertragungszeiten bestimmt.

Kurze Signalübertragungszeiten, insbesondere eine schnelle Verarbeitung der Signale, senken die Eigenzeiten und erhöhen die Genauigkeit (verringert den Fehler). Diese Berechnung stellt eine Annahme für den schlechtesten Fall ohne Kompensation der Zeitgeberungenauigkeiten durch Drift dar.

Im Folgenden werden Ergebnisse aus einer Voruntersuchung für das S-TDoA Verfahren zur Positionsbestimmung gezeigt und diskutiert. Dabei wird zuerst gezeigt, dass die Gleichung (1) gültig ist und als nächstes der Algorithmus und die Berechnung zur Positionsbestimmung mit dem erfinderischen Verfahren zur Positionsermittlung von Objekten durch sequentielle Ankunftszeitdifferenzbestimmung von periodischen Signalen getestet.

Für die Bewertung wurde der weiter oben beschriebene kabellose Sensor Knoten TriSOS benutzt. Ein Tag und vier Anker wurden in einem Testraum platziert. In der Voruntersuchung wurden Signale mit den gemessenen Zeiten über ein geeignetes mit einem Personal-Computer verbundenes Computernetzwerk/Schnittstelle erhoben.

Auf dem Personal-Computer wurden die Logs/Messungen gesichert, die statistischen Daten gesammelt und die Algorithmen zur Berechnung der aktuellen Positionen angewendet.

Dieser ergänzende Datenaustausch ist für die endgültige Anwendung nicht erforderlich, da alle Berechnungen am Tag geleistet werden. Der Datenaustausch erfolgt durch eine IEEE 802.15.4 2,4 GHz Schnittstelle (wireless sensor network security standard).

Als Erstes wird festgestellt, dass der Wert der Summe der Distanzen mit dem Wert des Zeitunterschieds der empfangenen Zeitstempel am Tag übereinstimmt und stellen damit die Gültigkeit der Gleichung (1) fest.

Dann wurden drei Positionen innerhalb der von den Ankern gebildeten Geometrie festgelegt.

In Fig. 5 sind vier Anker gezeigt, deren Positionen mit einem X mit Indices markiert sind und drei Tags gezeigt, die durch Kreise ihre Position markieren und mit T mit Indices bezeichnet sind. Die Positionen der Tags sind dabei willkürlich gewählt. Die Tags sind für alle Anker sichtbar. Die Entfernungen zwischen den Tags und den Ankern wurden mit einem Laser gemessen, der eine Genauigkeit von $\pm 2$ mm aufweist.

Die Messfolge und die Zeitnahmen wurden für alle Messungen ausgelöst und 250 Mal wiederholt. Die Ergebnisse sind Tabelle II zu entnehmen.

Die "ground truth"/Bodendaten in m sind die Entfernung

$$\delta s_{i,j} = s_{i,j} - s_{i,t} + s_{j,t}.$$

Der "measurement" / Messwert in m ist die gemessene Zeitdifferenz zwischen Anker ij minus die Eigenzeit des Anker j.

Für das Signalprozessing wurden messtechnische Ausreißer durch einen gleitenden Mittelwert gefiltert berücksichtigt. Derartige Ausreißer werden durch Mehrwegempfangseffekte und Rauschen im UWB Senderchip möglich.

Der Fehler für den "ground truth" /Bodendaten in m und den ermittelten Entfernungen bestimmt sich als:

$$\text{error} = \Delta t_{i,j}^* c_0 - s_{i,j} - s_{i,t} + s_{j,t}. \qquad (6)$$

Ein beispielhaftes Histogramm zusammen mit einer empirischen Summenverteilungsfunktion für den Fehler zeigt **Fig. 6.** Zum Vergleich ist eine Normalverteilung $\mathcal{N}$ mit $\mu$ =0,14 und $\sigma$ =0.022 m gezeigt.

Anzumerken ist dabei, dass keine Messung einen Mittelwert von 0 aufweist. Dieser Offset/diese Verschiebung von 0/ Abweichung von 0 kann durch die Zeitgeberungenauigkeiten durch Drift zwischen Tag und Anker während der Messperiode erklärt werden.

Um diese Drift zu kompensieren/zu reduzieren wird beispielsweise ein eine Temperatur kompensierender TCXO der Firma Geyer Elektronics (KXO-84) mit einer Eingangsfrequenztoleranz von 1.5 ppm eingesetzt.

Der typische Wert für die Frequenztoleranz/Frequenzabweichung beträgt $c_d$ = 0,8 ppm. S-TDoA Messperioden dauern insgesamt etwa t=5ms an, womit sich im ungünstigsten Fall ein Fehler von $e = 2tc_dc_0$ = 2.39 m errechnet.

Mit der zuvor beschriebenen Messkonfiguration kann diese Fehler kompensiert werden. Neben der Temperatur verursacht die Empfangsleistung die mittlere Messabweichung. Dennoch ist die mittlere Messabweichung innerhalb der der erwarteten Zeitgeberungenauigkeiten durch Drift.

Neben den Distanzen enthält die Tabelle auch die zu erwartende Position, die durch den Algorithmus berechnet wurde, zusammen mit der aus den "ground truth"/Bodendaten in m bestimmten Koordinaten, welche durch die Lasermessung als Referenzwerte gemessen wurden.

Die Koordinatenachsen und die Koordinaten sind in **Fig. 5** dargestellt. Der Fehler ist die Differenz zwischen "ground truth"/Bodendaten und die zu erwartende Position. Der euklidische Ortsfehler im Raum, welcher durch die Euklidische Norm (2- norm $\|\cdot\|_2$) für den Positionsfehler feststellbar ist nimmt im Beispiel einen Wert zwischen 0,36 m und 0,87 m an.

Insgesamt bestätigen die Messergebnisse die Theorie für S-TDoA, damit folgt, dass die Bedingungen für die Basisgleichungen erfüllt sind. Ergänzend konnte gezeigt werden, dass die Geräte und die Software die Anforderungen für S-TDoA erfüllen. Der Fehler für die erwartete Positionsabweichung bei drei gewählten Positionen ist besser als 1 m und liegt innerhalb der erwarteten Grenzen. Bessere Ergebnisse sind mit Kristallen mit höherer Frequenzstabilität und besserer Kompensationen der Zeitgeberungenauigkeiten durch Drift zu erwarten.

Im nächsten Schritt wird die Leistungsfähigkeit des gesamten auf S-TDoA basierenden Positionssystems mit vier Ankern gezeigt und mit TWR verglichen.

Im zweiten Teil der Darstellung der Leistungsfähigkeit wird ein komplettes System für das erfinderische Verfahren zur Positionsermittlung von Objekten durch sequentielle Ankunftszeitdifferenzbestimmung von periodischen Signalen gezeigt. Dazu wurden vier Anker an den Wänden eines Raums angebracht, wie in **Fig. 5** gezeigt. Der Tag wurde dabei entlang einer horizontalen Linie im Raum per Hand bewegt und ein Vergleich zwischen S-TDoA und einem Referenz TWR basierten Positionssystem mit einer Genauigkeit von 0,3 m durchgeführt.

In **Fig. 7** ist der gefilterte gleitende Mittelwert im linken Teil der Figur dargestellt. Für jede einzelne Position wurde die TWR Position berechnet und dem Ergebnis des S-TDoA Algorithmus gegenübergestellt, wobei Pfeile die jeweiligen Messpaare (Kreis S-TDoA, Kreuz TWR) kennzeichnen. Der euklidische Ortsfehler ist im rechten Teil der Fig. 7 für jedes Messpaar aufgezeigt. Für die Fehleränderungen für die unterschiedlichen Positionen sind vermutlich die Mehrfachübertragungen und Signalrauscheffekte verantwortlich.

Der maximale euklidische Ortsfehler zwischen S-TDoA und TWR ist 0,81 m mit einem mittleren Fehler von 0.31 m. Diese Ergebnisse zeigen, dass die geschätzte S-TDoA Position mit der realen Position korreliert. S-TDoA funktioniert und stellt eine zuverlässige Positionsabschätzung bereit. Die Genauigkeiten, die auch ohne Kompensationen der Zeitgeberungenauigkeiten durch Drift erreichbar sind, sind für eine Reihe von Anwendungen geeignet, wie z.B. Warenverfolgung in Kaufhäusern. Wie bereits ausgeführt, sind bessere Ergebnisse mit Kristallen mit höherer Frequenzstabilität und besserer Kompensationen der Zeitgeberungenauigkeiten durch Drift zu erwarten.

Zusammenfassend ist festzuhalten:

Diese Leistungsfähigkeit zeigt, dass S-TDoA in einer echten Situationsumgebung mit richtigen Geräten funktioniert. In der Anwendung im Beispiel ist die Genauigkeit für S-TDoA geringer als bei TWR, weil die Zeitgeberungenauigkeiten durch Drift sich höher auswirken als bei TWR. Die Signalwiederholungsrate für die Position mit S-TDoA ist nicht durch die Tag Dichte bestimmt, so dass die Anzahl der Tags nicht begrenzt ist und die Privatsphäre gesichert ist, weil Tags keine Signale weitergeben. Positionen werden am Tag selbst bestimmt, vergleichbar zu den bekannten GNSS Systemen. Eine Zentraleinheit für die Positionsbestimmung wird nicht benötigt.

Nachfolgend werden nochmals weitere Vorteile der diesseitigen Erfindung aufgezeigt:

Das diesseitige Verfahren führt eine Selbstortung durch, während im Stand der Technik bekannte Verfahren eine Fremdortung von Mobiltelefonen durchführen. In solchen Systemen gelten andere Randbedingungen, so sind z.B. die Basis Stationen untereinander vernetzt, z.B. durch einen Base Station Controller.

Weiter gibt es keinen Location Server und auch keinen ausgezeichneten Referenzpunkt. Ferner finden keine Distanzmessungen statt. Es finden im erfindungsgemäßen System keine Frequenzkompensationen statt und weiter werden keine Distanzen ausgetauscht, sondern Verarbeitungszeiten.

Ferner werden im erfindungsgemäßen System keine Paare ausgezeichnet und es werden keine Paare von fixen Knoten benötigt. Es werden auch keine Frequenzkompensationen benötigt, da das System Verarbeitungszeiten und keine Distanzen benutzt.

Im erfindungsgemäßen System wird eine Kette von Nachrichten von Referenzpunkten versendet. Die Referenzpunkte müssen dazu nur den darauffolgenden Referenzpunkt erreichen und nicht alle Teilnehmer im Netzwerk.

Der Start des Nachrichtenaustausches ist nicht abhängig von einem ausgezeichneten Referenzpunkt, sondern erfolgt sequentiell und nicht wie im Stand der Technik oftmals impliziert über Zeiten durch den Empfang einer Nachricht.

Es müssen nur aufeinanderfolgende Referenzpunkte erreichbar sein.

**Patentansprüche**

1. Positionsermittlungsverfahren zur Positionsermittlung wenigstens eines bewegbaren Objektes durch sequentielle Ankunftszeitdifferenzbestimmung,
   **mit den Schritten:**

   (1) Anker Knoten senden sequentiell Signale in Form von Datensätzen an weitere Anker Knoten und alle bewegbaren Objekte/Tags, wobei die Datensätze nicht auf die Weitergabe von Entfernungsinformationen beschränkt sind;
   (2) alle bewegbaren Objekte/Tags empfangen Datensätze und fangen mit den Datensätzen Empfangszeiten von zumindest zwei Anker Knoten auf, wobei eine Zeitdifferenz zwischen jeweils zwei Datensätzen kalkuliert wird;
   (3) Anker Knoten messen ihre jeweilige Eigenzeit zwischen dem Empfang und der Weitergabe der jeweiligen Datensätze und geben diese Information an das Netzwerk weiter;
   (4) alle bewegbaren Objekte/Tags stellen die Zeitdifferenzen zur Kalkulation der Position über sequentielle Ankunftszeitdifferenzbestimmung / TDoA bereit.

2. System zur Positionsbestimmung für ein Positionsermittlungsverfahren zur Positionsermittlung wenigstens eines bewegbaren Objektes durch sequentielle Ankunftszeitdifferenzbestimmung nach Anspruch 1,
   **dadurch gekennzeichnet, dass**
   wenigstens drei Anker in einem Raum positioniert sind, wobei zumindest ein bewegbares Objekt sich räumlich im geometrisch aufgespannten Raum der Anker befindet.

3. System zur Positionsbestimmung für ein Verfahren zur Positionsermittlung zumindest eines bewegbaren Objektes durch sequentielle Ankunftszeitdifferenzbestimmung nach dem vorangehenden Anspruch,
   **dadurch gekennzeichnet, dass**
   das System mit Positionsdaten zusätzliche Daten von Sensorikeinheiten, barometrischen Drucksensoren, Temperatursensoren und/oder inertialen Messeinheiten bereitstellend ausgebildet ist.

4. Ankersynchronisationsverfahren mit einem System nach einem der zwei vorangegangenen Ansprüche zur Synchronisation von Ankern auf Basis der Positionsermittlung,
   **dadurch gekennzeichnet, dass**
   zumindest folgende Schritte enthalten sind:

   (1) Bestimmung der Position der Anker
   (2) Berechnung der Distanzen d zwischen den jeweiligen Ankern i und j mit nach folgender Gleichung :

   $$d_{i,j} = \sqrt{(x_i - x_j)^2 + (y_i - y_j)^2 + (z_i - z_j)^2}$$

   (3) Synchronisierung der Anker über die bekannte Signallaufzeit, der bekannten Eigenzeiten, und Kompensation der Uhrendrift.

**Fig. 1**

**Fig. 2**

**Fig. 3**

Fig. 4

Fig. 5

**Fig. 6**

**Fig. 7**

**Tabelle I**

| Parameter | DS-TWR | U-TDOA |
|---|---|---|
| Update Rate $u$ | $u = \dfrac{1}{4 n_a n_t t_p}$ with $n_a \geqslant 3$ | $u = \dfrac{1}{t_t t_p}$ |
| Clock Synchronization | no | yes |

**Tabelle II**

| Tag Position | Parameter | Distances | | | Position | |
|---|---|---|---|---|---|---|
| | | $\delta s_{a,b}$ | $\delta s_{b,c}$ | $\delta s_{c,d}$ | x | y |
| $T_1$ | ground truth [m] | 0.92 | 7.46 | 1.60 | -4.94 | -2.41 |
| | measurement [m] | 0.58 | 6.51 | 2.72 | -4.69 | -3.25 |
| | error [m] | 0.33 | 0.92 | -1.13 | -0.24 | 0.84 |
| $T_2$ | ground truth [m] | 3.45 | 4.65 | 1.27 | -3.15 | -4.00 |
| | measurement[m] | 3.11 | 4.62 | 0.60 | -2.86 | -4.21 |
| | error [m] | 0.32 | 0.03 | 0.66 | -0.29 | 0.21 |
| $T_3$ | ground truth [m] | 2.37 | 1.77 | 0.29 | -3.64 | -5.78 |
| | measurement[m] | 2.99 | 1.91 | 1.38 | -3.08 | -5.23 |
| | error [m] | 0.61 | 0.14 | 1.08 | -0.55 | -0.55 |

Europäisches
Patentamt

European
Patent Office

Office européen
des brevets

**EUROPÄISCHER RECHERCHENBERICHT**

Nummer der Anmeldung

EP 17 15 7702

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2015/084981 A1 (RED POINT POSITIONING CORP [US]) 11. Juni 2015 (2015-06-11) * Seite 3, Zeile 21 - Seite 7, Zeile 23 * * Abbildungen 1-6 * * Zusammenfassung * ----- | 1-4 | INV. G01S5/10 G01S5/02 |
| A | WO 2009/110669 A1 (KOREA ELECTRONICS TELECOMM [KR]; NAM YOON SEOK [KR]; HUH JAE DOO [KR];) 11. September 2009 (2009-09-11) * Seite 7, Absatz 37 - Seite 21, Absatz 148 * * Abbildungen 1-7 * * Zusammenfassung * ----- | 1-4 | |
| A | Rick Roberts: "November 2004 IEEE P802.15-04-0581r7 IEEE P802.15 Wireless Personal Area Networks Project IEEE P802.15 Working Group for Wireless Personal Area Networks (WPANs) Title Ranging Subcommittee Final Report", , 1. November 2004 (2004-11-01), Seiten 1-37, XP055400179, Gefunden im Internet: URL:http://grouper.ieee.org/groups/802/15/pub/04/15-04-0581-07-004a-ranging-subcommittee-final-report.doc [gefunden am 2017-08-22] * Seite 6, Absatz 3 - Seite 9 * ----- | 1-4 | |

RECHERCHIERTE SACHGEBIETE (IPC)

G01S

Der vorliegende Recherchenbericht wurde für alle Patentansprüche erstellt

| Recherchenort | Abschlußdatum der Recherche | Prüfer |
|---|---|---|
| München | 22. August 2017 | von Walter, Sven-Uwe |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
    .....................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 15 7702

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-08-2017

| Im Recherchenbericht angeführtes Patentdokument | Datum der Veröffentlichung | Mitglied(er) der Patentfamilie | Datum der Veröffentlichung |
|---|---|---|---|
| WO 2015084981 A1 | 11-06-2015 | CN 105993187 A<br>EP 3078222 A1<br>US 2015156746 A1<br>WO 2015084981 A1 | 05-10-2016<br>12-10-2016<br>04-06-2015<br>11-06-2015 |
| WO 2009110669 A1 | 11-09-2009 | KR 20090096141 A<br>US 2011007650 A1<br>WO 2009110669 A1 | 10-09-2009<br>13-01-2011<br>11-09-2009 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **R. FILJAR ; G. JEZIC ; M. MATIJASEVIC.** Location-Based Services: A Road Towards Situation Awareness. *Journal of Navigation,* 2008
- **H. LIU ; H. DARABI ; P. BANERJEE ; J. LIU.** Survey of Wireless Indoor Positioning Techniques and Systems. *IEEE Transactions on Systems, Man, and Cybernetics, Part C: Applications and Reviews,* 2007, vol. 37 (6), 1067-1080
- **G. DEAK ; K. CURRAN ; J. CONDELL.** A Survey of Active and Passive Indoor Localisation Systems. *Computer Communications,* 2012, vol. 35 (16), 1939-1954
- **VON H. LIU ; H. DARABI ; P. BANERJEE ; J. LIU.** A survey of wireless indoor positioning techniques and systems. *Survey of Wireless Indoor Positioning Techniques and Systems,'' IEEE Transactions on Systems, Man, and Cybernetics, Part C: Applications and Reviews,* 2007, vol. 37 (6), 1067-1080
- **J. WANG ; R. K. GHOSH ; S. K. DAS.** A Survey on Sensor Localization. *Journal of Control Theory and Applications,* 2010
- **J. SHEN ; A. F. MOLISCH ; J. SALMI.** Accurate Passive Location Estimation using TOA Measurements. *IEEE Transactions on Wireless Communications,* 2012, vol. 11 (6), 2182-2192
- **R. M. VAGHEFI ; R. M. BUEHRER.** Asynchronous Time-of-Arrival-based Source Localization. *ICASSP,* 2013, 4086-4090
- Positioning using Time-Difference of Arrival Measurements. **GUSTAFSSON ; F. GUNNARSSON.** IEEE International Conference on Acoustics, Speech, and Signal Processing. IEEE, 2003, vol. 6, VI-553
- **FISCHER.** Observed Time Difference Of Arrival (OTDOA) Positioning in 3GPP LTE. *Technical report, July, Tech. Rep.,* 2014
- An Asymmetrie Double Sided Two-Way Ranging for Crystal Offset. **JIANG ; V. LEUNG.** International Symposium on Signals, Systems and Electronics. IEEE, 2007, 525-528
- **J. XING ; L. ZHIWEI et al.** Symmetrie Double Side Two Way Ranging with Unequal Reply Time. *IEEE 66th VehicularTechnology Conference,* 2007, 1980-1983
- **Z. SAHINOGLU ; S. GEZICI.** Ranging in the IEEE 802.15. 4a Standard. *Wireless and Microwave Technology Conference,* 2006, 1-5
- An Asymmetrie Double Sided Two-Way Ranging for Crystal Offset. **Y. JIANG ; V. LEUNG.** International Symposium on Signals, Systems and Electronics. IEEE, 2007, 525-528
- Symmetric Double Side Two Way Ranging with Unequal Reply Time. **L. J. XING ; L. ZHIWEI et al.** IEEE 66th VehicularTechnology Conference. 2007, 1980-1983
- **P. DALY.** Navstar GPS and GLONASS: Global Satellite Navigation Systems. *Electronics & Communication Engineering Journal,* 1993
- **H. XIONG ; Z. CHEN ; W. AN ; B. YANG.** Robust TDOA LOcalisation Algorithm for Asynchronous Wireless Sensor Networks. *Journal of Distributed Sensor Networks,* 2015